# EUROPÄISCHE PATENTANMELDUNG

(11) **EP 1 122 478 A2**
(43) Veröffentlichungstag der Anmeldung: **08.08.2001**
(21) Anmeldenummer: 00125556.1
(22) Anmeldetag: 22.11.2000
(51) Int. Cl.: F16L 5/02

(54) **Dichtpackung zum Hindurchführen von Leitungen durch eine Wand**

(30) Priorität: 26.01.2000 DE 10003143
(71) Anmelder: Hauff-Technik GmbH & Co. KG, 89542 Herbrechtingen (DE)
(72) Erfinder: Heck, Martin, 89447 Zöschingen (DE)
(74) Vertreter: Weitzel, Wolfgang, Dr.-Ing. Patentanwalt

(57) **Zusammenfassung**

Die Erfindung betrifft eine Dichtpackung zum Hindurchführen von Leitungen durch eine Maueröffnung.

Gemäß der Erfindung ist die Dichtpackung mit den folgenden Merkmalen ausgestattet:
mit einem Schutzrohr (1) zum Einsetzen in die Maueröffnung sowie mit einem am Ende des Schutzrohres (1) vorgesehenen Montagerahmen;
mit einem Rohrstutzen (2), der in das Schutzrohr (1) von dessen einer Seite hin einschiebbar und mit diesem verankerbar ist;
der Rohrstutzen (2) weist Rastrippen (2.2) auf, die in Umfangsrichtung verlaufen, und das Schutzrohr (1) weist entsprechende Halterippen (1.2) auf, die mit den Rastrippen (2.2) bei Verdrehen des Rohrstutzens (2) einen Bajonettverschluß bilden;
es ist eine Mutter (3) vorgesehen, die auf den Rohrstutzen (2) aufschraubbar ist, um sich wenigstens mittelbar an der Mauerfläche abzustützen;
der Bajonettverschluß ist einrastbar durch relatives Verdrehen von Schutzrohr (1) und Rohrstutzen (2) in derselben Drehrichtung, in der die Mutter (3) aufgeschraubt wird;
die Rastrippen (2.2) sind mit Vorsprüngen (2.2.2) versehen, die ein Lösen des Bajonettverschlusses durch Verdrehen nur nach Ausüben eines Schubes auf den Rohrstutzen (2) in Richtung auf den Montagerahmen erlauben.

## Beschreibung

Die Erfindung betrifft eine Dichtpackung zum Hindurchführen von Leitungen, wie Kabeln, Rohrleitungen durch eine Betonwand.

Derartige Dichtpackungen umfassen als wesentliches Element ein Schutzrohr, das in eingebautem Zustand an der Laibung der Betonwand eng anliegt. Wenigstens an einem Ende des Schutzrohres ist ein Montagerahmen angeschlossen, der sich im Bereich der betreffenden Wandfläche befindet und mit seinem Ringflansch im allgemeinen an der Wandfläche anliegt. Die Außenfläche des Montageflansches ist bündig mit der Außenfläche der Betonwand.

Die Dichtpackung wird in der Praxis vormontiert, das heißt Schutzrohr und Montagerahmen werden zusammengefügt. Sodann wird diese Einheit in die Schalung der Betonwand an der entsprechenden Stelle eingelegt und vergossen. Sodann wird der Deckel mit den hindurchgeführten Leitungen wie Kabeln oder dergleichen mit dem Montagerahmen verbunden.

Solche Dichtpackungen weisen ferner im allgemeinen eine Mutter auf, die auf den Rohrstutzen aufschraubbar ist, und die sich in aufgeschraubtem Zustand mittelbar oder unmittelbar unter Druck gegen die Mauerfläche abstützt, bzw. gegen den genannten Ringflansch des Schutzrohres. Dabei wird üblicherweise eine Dichtung zwischengelegt.

Der Erfindung liegt die Aufgabe zugrunde, eine Dichtpackung der genannten Art derart zu gestalten, daß das Lösen des Rohrstutzens vom Schutzrohr und das Herausführen aus diesem nur in kontrollierter Weise geschieht.

Diese Aufgabe wird durch die Merkmale von Anspruch 1 gelöst. Durch die erfindungsgemäße Anordnung wird folgendes erreicht: Wirkt auf den Rohrstutzen in eingesetztem Zustand eine Zugkraft, so ist ein Lösen nicht möglich. Gemäß der Erfindung verhindern nämlich die Vorsprünge der Rastrippen ein Verdrehen und stellen somit eine Sicherung dar. Diese Sicherung läßt sich nur dadurch lösen, daß auf den Rohrstutzen ein Schub in Richtung auf den Montagerahmen bzw. auf das Schutzrohr ausgeübt wird. Nunmehr ist ein relatives Verdrehen der Bajonettelemente im Sinne eines Lösens möglich.

Dabei kann es von Vorteil sein, zwischen der Mutter und dem Montagerahmen eine Dichtung zwischenzufügen, die das Bestreben hat, den Rohrstutzen vom Montagerahmen abzudrücken. Damit bewirkt sie den genannten Zug auf den Rohrstutzen und verhindert - wie oben ausgeführt - das Lösen des Bajonettverschlusses.

Die Erfindung ist anhand der Zeichnungen erläutert. Darin ist im einzelnen folgendes dargestellt:
- Figur 1: zeigt die wesentlichen Bestandteile einer Dichtpackung in eingebautem Zustand in einem Axialschnitt.
- Figur 2: zeigt in vergrößerter Darstellung im Schnitt eine Halterippe 1.2 mit einer Rastrippe 2.2.
- Figur 3: zeigt einen Rohrstutzen mit Mutter und Anschluß-Rohrleitung in einer gegenüber Figur 1 vergrößerter Darstellung.

Ein Schutzrohr 1 ist in die Öffnung einer Mauer eingesetzt. Das Schutzrohr 1 weist an seinem einen Ende einen Ringflansch 1.1 auf. Das andere Ende ist hier nicht dargestellt.

Schutzrohr 1 und Rohrstutzen 2 sind durch einen Bajonettverschluß miteinander verriegelt, so daß sich der Rohrstutzen 2 nicht aus Schutzrohr 1 herausziehen läßt. Zu diesem Zweck ist einerseits das Schutzrohr 1 mit Halterippen 1.2 versehen, und andererseits der Rohrstutzen 2 mit Rastrippen 2.2. Dabei erstrecken sich die Halterippen 1.2 und die Rastrippen 2.2 in Umfangsrichtung und weisen eine bestimmte Länge auf. Zwischen zwei einander benachbarten Halterippen 1.2 und zwischen zwei einander benachbarten Rastrippen 2.2 verbleibt jeweils ein Abstand, der mindestens gleich der Länge der Halterippen 1.2 bzw. der Rastrippen 2.2 ist.

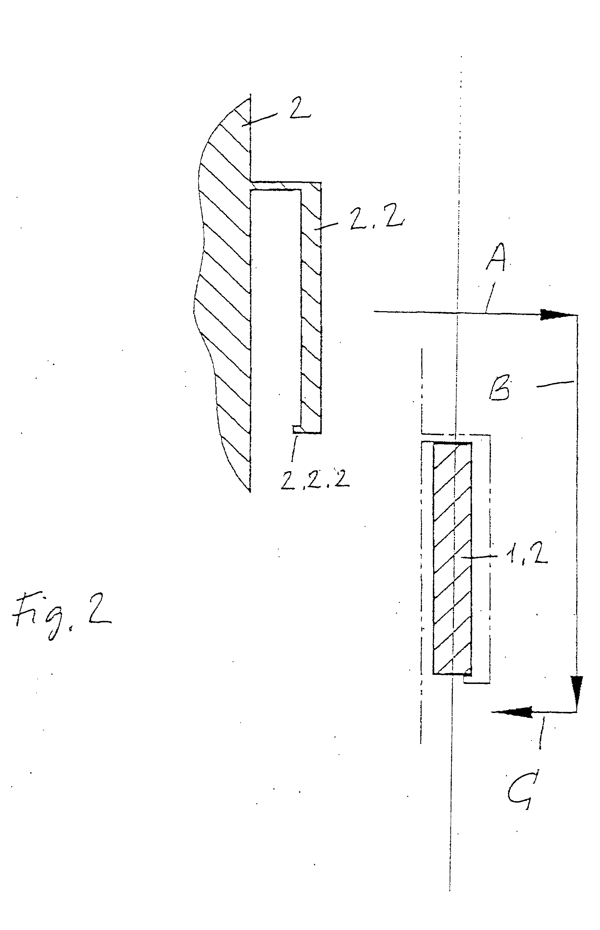

Wegen der Gestaltung der Rastrippen 2.2 im einzelnen wird auf Fig. 2 verwiesen.

Wie man sieht, ist eine Mutter 3 auf den Rohrstutzen 2 aufgeschraubt. Die Mutter 3 weist einen Ringflansch 3.1 auf. Man erkennt ferner einen O-Ring 4. Wird die Mutter 3 stramm angezogen, so liegt der Ringflansch 3.1 der Mutter am Ringflansch 1.1 des Schutzrohres 1 satt an. Nunmehr ist nicht nur eine formschlüssige Verbindung durch den Bajonettverschluß hergestellt, sondern auch eine kraftschlüssige Verbindung durch die Mutter 3.

In das Schutzrohr 1 ist ein Rohrstutzen 2 eingeführt.

In Figur 2 erkennt man im einzelnen eine Halterippe 1.2 und eine Rastrippe 2.2. Die Rastrippe 2.2 ist Bestandteil des Rohrstutzens 2. Ganz entscheidend ist der Vorsprung 2.2.2, der in diesem Falle mit der Rastrippe 2.2 einteilig ist.

Man beachte die Pfeile A, B und C, die veranschaulichen, in welcher Weise die beiden genannten Bajonettelemente, nämlich Halterippe 1 und Rastrippe 2 miteinander in Eingriff gebracht werden. In der rechten Darstellung ist die Halterippe 1.2 ausgezogen dargestellt, und die Rastrippe 2.2 ist strichpunktiert dargestellt. Dabei umgreift der Vorsprung 2.2.2 die Halterippe 1.2 und verhindert somit ein gegenseitiges Verdrehen der beiden Elemente. Diese Situation liegt dann vor, wenn auf den Rohrstutzen 2 ein Zug ausgeübt wird. Solange dieser Zustand herrscht, liegen die beiden Rippen 1.2 und 2.2 satt aneinander an, und der Vorsprung 2.2.2 dient als Riegel gegen ein Verdrehen. Ein Lösen kann nur dann stattfinden, wenn statt des Zugs ein Schub ausgeübt wird, somit in Richtung des Pfeiles A.

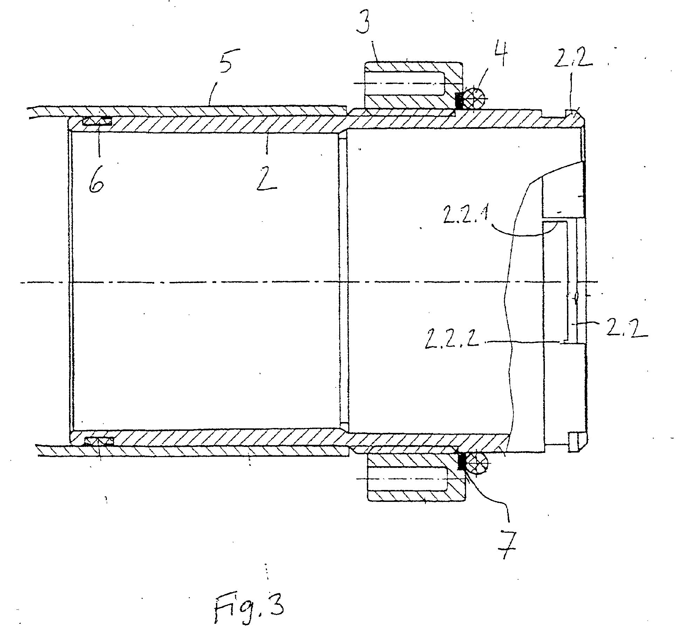

Figur 3 zeigt genauer, wie ein erfindungsgemäßer Rohrstutzen aufgebaut ist. Auch hier ist auf den Rohrstutzen wieder eine Mutter 3 aufgeschraubt. Ebenfalls ist ein O-Ring 4 vorgesehen. In der Darstellung links ist eine Rohrleitung 5 an den Rohrstutzen 2 angeschlossen. Dabei ist eine weitere Dichtung 6 zwischengefügt.

Die erfindungsgemäße Gestaltung des Rohrstutzens 2 ergibt sich aus dem rechten Bereich der Darstellung. Man erkennt wiederum Rastrippen 2.2. Wie man sieht, weist jede Rastrippe einerseits einen Endanschlag 2.2.1 auf, und andererseits einen Vorsprung 2.2.2.

Zum Zwecke des Herstellens des Bajonettverschlusses wird der Rohrstutzen 2 verdreht. In Blickrichtung des Pfeiles A findet die Verdrehung im Gegenzeigersinn statt, somit im selben Drehsinn, in dem auch die Mutter 3 auf den Rohrstutzen 2 aufgeschraubt wird.

Man erkennt am einen Ende der einen Rastrippe 2.2 einen Vorsprung 2.2.2, und am anderen Ende einen Endanschlag 2.2.1. Der Vorsprung führt erfindungsgemäß die folgende Funktion aus:

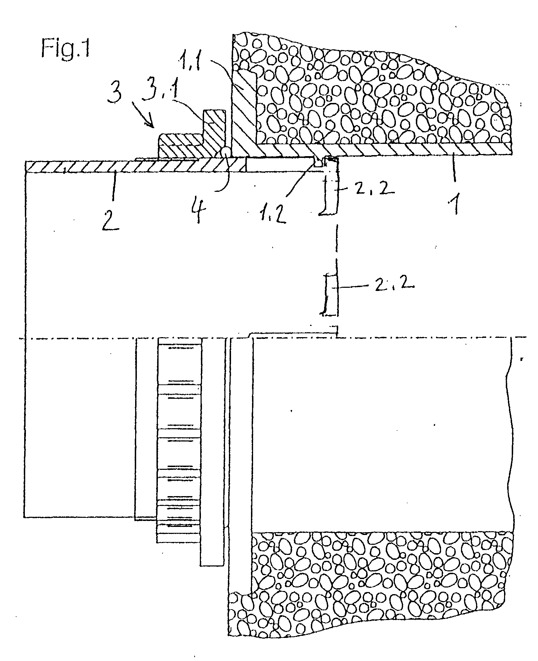

Ist der Rohrstutzen 2 in ein Schutzrohr 1 eingesetzt, so wie in Fig. 1 veranschaulicht, und soll der Rohrstutzen 2 zu irgendeinem Zeitpunkt vom Schutzrohr gelöst und aus diesem herausgenommen werden, so muß zunächst die Mutter 3 aufgeschraubt werden. Sie wird aufgeschraubt durch Verdrehen im Uhrzeigersinn, wenn man in Richtung des Pfeiles A blickt.

Der genannte O-Ring 4 oder ganz allgemein eine sonstige Art von elastischer Dichtung kann sich vorteilhaft auf das Funktionieren der Erfindung auswirken. Aufgrund der Elastizität bewirkt sie nämlich einen Zug auf die Mutter 3 im Sinne eines Abdrückens der Mutter 3 und damit des Rohrstutzens 2 vom Schutzrohr 1 mit zugehörendem Montagerahmen. Sie erzeugt damit einen Zug, der, wie oben erwähnt ein Verdrehen und damit ein Lösen des Bajonettverschlusses verhindert. Der O-Ring 4 wirkt nach Art einer Druckfeder. Er schafft einen Zustand des permanenten Zuges zwischen Montagerahmen und Mutter oder Deckel.

Ein Gleitring 7 aus Kunststoff zwischen der Mutter 3 und dem O-Ring 4 kann hilfreich sein.

## Patentansprüche

1. Dichtpackung zum Hindurchführen von Leitungen wie Kabeln, Rohrleitungen durch eine Maueröffnung;
1.1 mit einem Schutzrohr (1) zum Einsetzen in die Maueröffnung sowie mit einem am Ende des Schutzrohres vorgesehenen Montagerahmen (1.1);
1.2 mit einem Rohrstutzen (2), der in das Schutzrohr (1) von dessen einer Seite hin einschiebbar und mit diesem verankerbar ist;
1.3 der Rohrstutzen (2) weist Rastrippen (2.2) auf, die in Umfangsrichtung verlaufen, und das Schutzrohr (1) weist entsprechende Halterippen auf, die mit den Rastrippen bei Verdrehen des Rohrstutzens (2) einen Bajonettverschluß bilden;
1.4 es ist eine Mutter (3) vorgesehen, die auf den Rohrstutzen (2) aufschraubbar ist, um sich wenigstens mittelbar an der Mauerfläche abzustützen;
1.5 der Bajonettverschluß ist einrastbar durch relatives Verdrehen von Schutzrohr (1) und Rohrstutzen (2) in derselben Drehrichtung, in der die Mutter (3) aufgeschraubt wird;
1.6 die Rastrippen (2.2) sind mit Vorsprüngen (2.2.2) versehen, die ein Lösen des Bajonettverschlusses durch Verdrehen nur nach Ausüben eines Schubes auf den Rohrstutzen (2) in Richtung auf den Montagerahmen (1.1) erlauben.

2. Dichtpackung nach Anspruch 1, dadurch gekennzeichnet, daß zwischen der Mutter (3) und dem Montagerahmen (1.1) eine elastische Dichtung (4) angeordnet ist, die die Tendenz hat, den Rohrstutzen (2) aus dem Schutzrohr (1) herauszuziehen.

3. Dichtpackung nach Anspruch 1 oder 2, dadurch gekennzeichnet, daß zwischen der Mutter (3) und der Dichtung (4) ein Gleitring (7) angeordnet ist.
